# EUROPEAN PATENT SPECIFICATION

(11) **EP 4 619 189 B1**
(45) Date of publication and mention of the grant of the patent: **02.09.2026**
(21) Application number: 23812852.4
(22) Date of filing: 13.11.2023
(51) Int. Cl.: B24B 19/14, F03D 80/50, B24B 23/08, B24B 27/08, F03D 1/06, F03D 80/30

(54) **AUTOMATED MACHINING TOOL FOR REMOVING MATERIAL FROM A SURFACE OF A WIND TURBINE BLADE, AND METHOD OF PERFORMING A MACHINING OPERATION ON A WIND TURBINE BLADE**
AUTOMATISIERTES BEARBEITUNGSWERKZEUG ZUM ENTFERNEN VON MATERIAL VON EINER OBERFLÄCHE EINER WINDTURBINENSCHAUFEL UND VERFAHREN ZUR DURCHFÜHRUNG EINES BEARBEITUNGSVORGANGS AUF EINER WINDTURBINENSCHAUFEL
OUTIL D'USINAGE AUTOMATISÉ POUR ÉLIMINER UN MATÉRIAU D'UNE SURFACE D'UNE PALE D'ÉOLIENNE, ET PROCÉDÉ DE RÉALISATION D'UNE OPÉRATION D'USINAGE SUR UNE PALE D'ÉOLIENNE

(30) Priority: 15.11.2022 DK PA202270557
(43) Date of publication of application: 24.09.2025
(73) Proprietor: VESTAS WIND SYSTEMS A/S, 8200 Aarhus N (DK)
(72) Inventor: BECH, Anton, 8200 Aarhus N (DK)
(74) Representative: Vestas Patents Department
(86) International application number: PCT/DK2023/050276
(87) International publication number: WO 2024/104541

(56) References cited:
- WO-A1-2022/043487
- CN-A- 111 922 854
- JP-A- H01 184 899
- US-A1- 2020 238 324

## Description

The present invention relates to an automated machining tool for machining a surface of a wind turbine blade; a machining system comprising a wind turbine blade and the automated machining tool; and a method of performing a machining operation on a wind turbine blade, see claims 1, 15, and 16 respectively.

### BACKGROUND OF THE INVENTION

Wind turbine blades typically have an electrically conductive part beneath non-conductive material near the blade outer surface. The electrically conductive part may be a metallic foil forming part of a lightning protection system of the blade. The foil may be damaged or may be made with undesirable defects. In order to avoid discarding the entire blade, a damaged or defective portion of the electrically conductive part may need repair.

Since the electrically conductive part is beneath non-conductive material a machining operation is generally required to remove the non-conductive material before the electrically conductive part can be repaired. The electrically conductive part can be thin and so the machining operation needed is very delicate. Hand operated machining tools can easily go too deep and destroy the electrically conductive part. Machining down to expose the electrically conductive part is especially difficult when the blade is installed on a wind turbine (so called 'up-tower'), particularly when wind is present. The blade is swaying, and the accuracy of handheld machining is lost. The machining operation may cause heat to be generated which may additionally cause the electrically conductive part to detach from its underlying substrate. This complicates the work and impacts the quality of the work. For example, in the case of a grinding operation, a course grade of grinding media reduces the heat but quickly removes too much of the electrically conductive part when grinding with a handheld power tool.

US2020/238324 (describing the preamble of claim 1) shows a system with a robot for working on vertical or inclined surfaces of a wind turbine blade. WO2022/043487 (describing the preamble of claim 16) shows a method for repairing a lightning protection system of a wind turbine rotor blade.

### SUMMARY OF THE INVENTION

A first aspect of the invention provides an automated machining tool for removing material from a surface of a wind turbine blade according to claim 1, comprising inter alia: a mounting portion for mounting the tool on an outer surface of a wind turbine blade having an electrically conductive part beneath non-conductive material near the outer surface; an tool head having electrically conductive material; a drive system for rotating and/or reciprocating the tool head for performing a machining operation on the wind turbine blade and for moving the tool head towards and away from the wind turbine blade; and a control system coupled to the drive system and to the tool head and adapted to be coupled to the electrically conductive part of the wind turbine blade, wherein the control system is adapted to: detect electrical contact between the electrically conductive material and the electrically conductive part while the machining tool is performing a machining operation on the wind turbine blade using the tool head, and automatically control the drive system to retract the tool head away from the wind turbine blade when electrical contact between the electrically conductive material and the electrically conductive part of the wind turbine blade is detected.

The invention is advantageous in that the automated tool may be used to machining away the non-conductive material over the electrically conductive part without risking damaging the electrically conductive part. This may improve the quality of up-tower work and is also suitable for down-tower and in factory rework. The tool senses when the machining tool makes contact with the electrically conductive part by electrical sensing between the tool and the electrically conductive part.

The control system may be further adapted to automatically control the drive system to move the tool head to advance the tool head into the wind turbine blade while performing a machining operation.

The control system may be further adapted to automatically control the drive system to advance the tool head into the wind turbine blade by either a predetermined distance or until electrical contact between the electrically conductive material and the electrically conductive part is detected.

The control system may be further adapted to automatically control the drive system to retract the tool head away from the wind turbine blade immediately upon electrical contact between the electrically conductive material and the electrically conductive part of the wind turbine blade being detected.

The automated tool can machine down to the electrically conductive part, but not machine into the electrically conductive part as the tool is retracted as soon as the electrically conductive material of the tool head of the tool touches the electrically conductive part.

The control system may be further adapted to automatically control the drive system to advance the tool head into a second area of the wind turbine blade neighbouring a first area of the wind turbine blade following an instance of retracting the tool head away from a first area of the wind turbine blade due to detecting electrical contact between the electrically conductive material and the electrically conductive part of the wind turbine blade in the first area.

The control system may be further adapted to terminate rotating and/or reciprocating of the tool head once one or more conditions having been satisfied, the conditions including i) a predetermined time has elapsed, ii) the tool head has been advanced into the wind turbine blade a predetermined distance, or iii) a predetermined number of detections of electrical contact between the electrically conductive material and the electrically conductive part has occurred.

The tool head may comprise an abrasive wheel, i.e. a grinding wheel, and the electrically conductive material comprises electrically conductive abrasive media

The tool head may be rotatable about an axis inclined with respect to the normal to the outer surface of the wind turbine blade in use.

The tool head may have a doubly curved surface having the material attached thereto.

The doubly curved surface may be a part-spherical surface.

The tool head may have a recessed or concave central portion without material.

The drive system may be further configured for moving the tool head in two orthogonal directions across the outer surface of the wind turbine blade in use.

The drive system may be configured for moving the tool head in a spiral, circular, linear or raster motion across a machining area of the wind turbine blade.

The tool may further comprise an electrical cable for coupling between the electrically conductive part of the wind turbine blade and the control system, and preferably wherein the control system is adapted to detect when electrical contact is made between the electrically conductive material and the electrically conductive part of the wind turbine blade by monitoring a current in the electrical cable.

The material may comprise one or more of: boron doped diamond, or tungsten carbide.

The mounting portion may comprise suction cups for attaching the tool to the outer surface of the wind turbine blade by vacuum suction.

A further aspect of the invention provides a machining system according to claim 15, comprising inter alia a wind turbine blade having an outer surface and an electrically conductive part beneath non-conductive material; and a tool according to the first aspect for attachment to the outer surface of the wind turbine blade and for performing a machining operation on the wind turbine blade.

A yet further aspect of the invention provides a method of performing a machining operation on a wind turbine blade according to claim 16, comprising inter alia:
providing a wind turbine blade having an outer surface and an electrically conductive part beneath non-conductive material near the outer surface; mounting an automated machining tool to the outer surface of the wind turbine blade, the automated machining tool having an tool head with electrically conductive material; and performing a machining operation on the wind turbine blade using the tool head, including automatically retracting the tool head away from the wind turbine blade when electrical contact between the electrically conductive material and the electrically conductive part of the wind turbine blade is detected.

The method may further comprise one or more of: i) automatically moving the tool head to advance the tool head into the wind turbine blade while performing a machining operation; ii) automatically advancing the tool head into the wind turbine blade by either a predetermined distance or until electrical contact between the electrically conductive material and the electrically conductive part of the wind turbine blade is detected; iii) automatically retracting the tool head away from the wind turbine blade immediately electrical contact between the electrically conductive material and the electrically conductive part of the wind turbine blade is detected; iv) automatically advancing the tool head into a second area of the wind turbine blade neighbouring a first area of the wind turbine blade following an instance of retracting the tool head away from a first area of the wind turbine blade due to detecting electrical contact between the electrically conductive material and the electrically conductive part of the wind turbine blade in the first area; and v) automatically terminating movement, e.g. rotation or reciprocation, of the tool head once one or more conditions having been satisfied.

Preferably the machining operation is a grinding operation. The machining operation may be a cutting, routing, planing or other machining operation to remove material from the surface of the wind turbine blade.

The automated machining tool is a tool according to the first aspect.

The electrically conductive part may be a metallic foil, preferably a metallic foil forming part of a lightning protection system of the wind turbine blade.

### BRIEF DESCRIPTION OF THE DRAWINGS

Embodiments of the invention will now be described with reference to the accompanying drawings, in which:
Figure 1 shows a schematic drawing of a wind turbine;
Figure 2a shows a schematic drawing of a wind turbine blade;
Figure 2b shows a cross-section of a wind turbine blade;
Figure 3a to 3d show plan views of a wind turbine blade during different stages of a foil repair process;
Figures 4a and 4b show side and plan views of an exemplary automated machining tool;
Figure 5 shows an exemplary tool head of the tool;
Figures 6a and 6b show the tool head performing a machining operation on a wind turbine blade;
Figure 7 shows a further example of the tool; and
Figure 8 shows a yet further example of the tool.

### DETAILED DESCRIPTION OF EMBODIMENT(S)

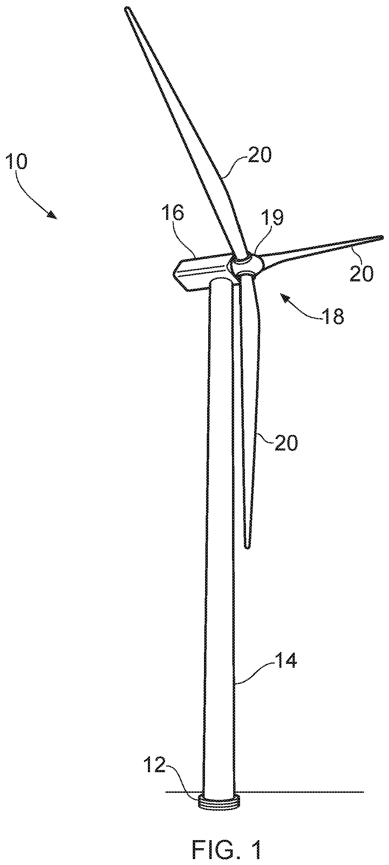

Figure 1 shows a wind turbine 10. The wind turbine has a main tower 14 extending upwardly from a foundation 12 and a nacelle 16 supported at the top of the main tower 14. Rotatably attached to the nacelle 16 is a rotor 18, which has a central hub 19 and wind turbine blades 20 extending radially outwardly from the hub 19.

When wind blows, the blades 20 are arranged to generate lift in order to rotate the rotor 18. The rotor 18 is coupled to a generator inside the nacelle 16, which is arranged to convert the rotary movement of the rotor 18 into electrical energy.

In order to protect the wind turbine blade 20 from lightning strikes, the blades may have a lightning strike protection system, which may include a metallic foil near to the outer surface of the wind turbine blade and may include a metallic tip or other discrete lightning receptors of the wind turbine blade. The metallic foil may also be referred to or considered as a grid, expanded foil, or a mesh. More generally, a metallic sheet or layer may be used.

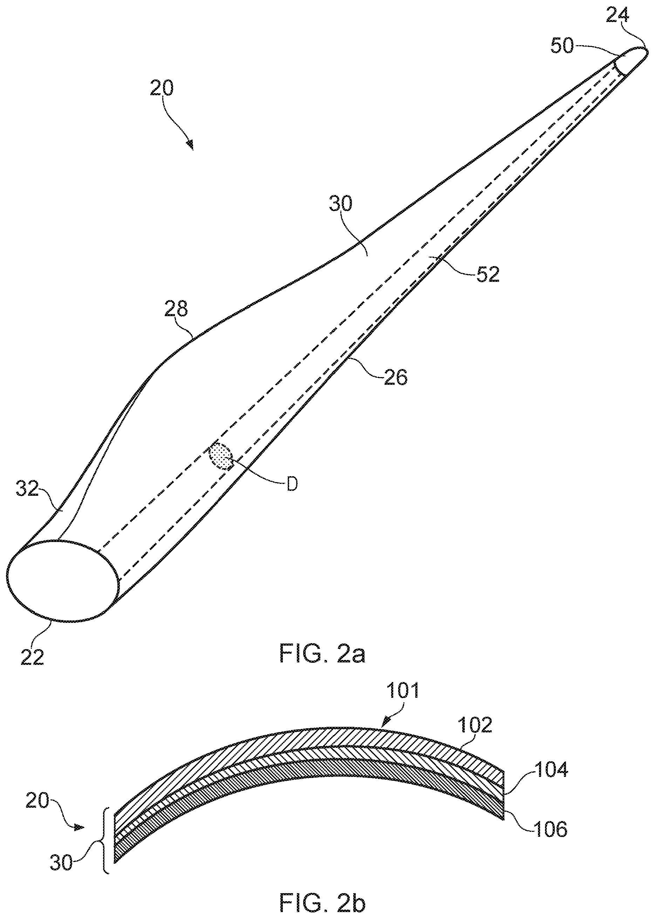

Figure 2a shows a wind turbine blade 20, the blade having a root end 22 and a tip end 24 as well as a leading edge 26 and trailing edge 28, a pressure surface 30 and a suction surface 32. At the tip 24 there is a metallic lightning receptor 50 and a metallic foil 52, which may extend from the metallic lightning receptor 50 to the root end 22. Alternatively, the metallic foil 52 may extend only part of the way along the blade and may be electrically coupled to the root end 22 via a cable. As further options, there may be multiple foils 52 in parallel and one or more cables may extend from the lightning receptor 50 to the root end 22 in parallel with the one or more foils 52. The metallic foil 52 may be under the outer surface 101 of the wind turbine blade 20, and may be covered by a gel coat, a paint later and/or a layer of fibre glass. The materials covering the metallic foil 52 are not electrically conductive. The metallic foil 52 is an example of an electrically conductive part 104 beneath the non-conductive materials near the outer surface 101 of the blade.

Metallic foils may incur damage or defects, as shown by the region D in Figure 2a. The damage may be caused by impact to the blade surface, such as from birds or during transportation or may be a manufacturing defect caused by e.g. problems in blade demoulding or a misplaced metallic foil. While the damage D shown is on the pressure surface, it will be understood that any region of the blade, such as the suction surface may also be damaged or defective.

Figure 2b illustrates how the electrically conductive part 104, e.g. metallic foil 52 may be arranged within the wind turbine blade 20. Specifically, Figure 2b shows a cross-section of the shell of the wind turbine blade 20 at the pressure surface 30, although it will be understood that the suction surface 32 may have a similar structure. The shell has a structural substrate 106, which may be formed of a composite material such as carbon fibre and/or glass fibre reinforced plastic. An electrically conductive part 104 may be arranged on top of the structural substrate 106 and a surface layer 102 may be arranged on top of the electrically conductive part 104. The thicknesses of the layers shown in Figure 2b are not to scale. The thickness of the metallic foil 52 may be approximately 0.25mm. It will be understood that the structural substrate 106 may have a greater thickness than the other two layers and that the electrically conductive part 104 and the surface layer 102 may be thinner than the structural substrate 106. The blade 20 may also comprise a structural web or interior box section, which is not shown.

The surface layer 102 may comprise a composite material, such as a fleece layer, and may also comprise a paint or a gel coat layer. The surface layer 102 is formed of non-electrically conductive materials.

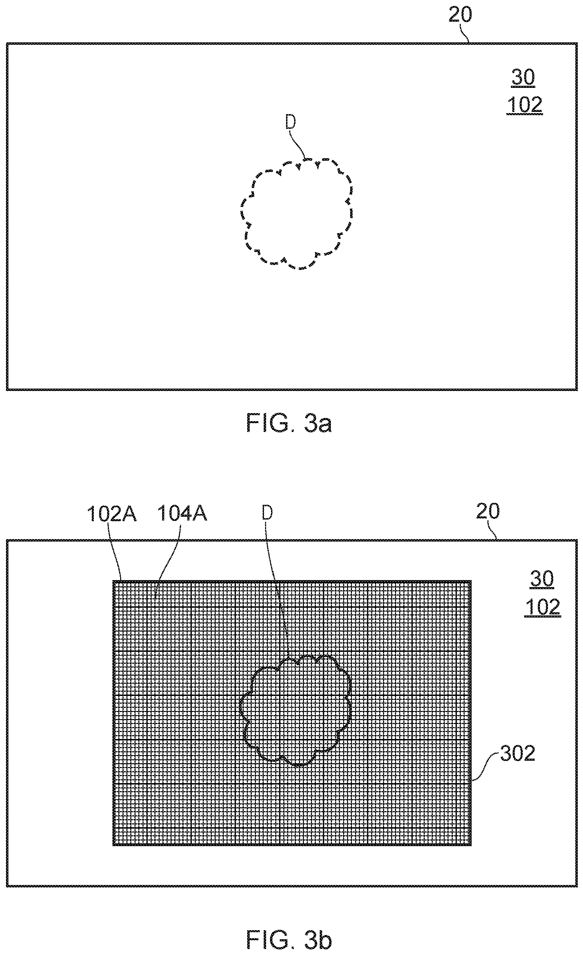

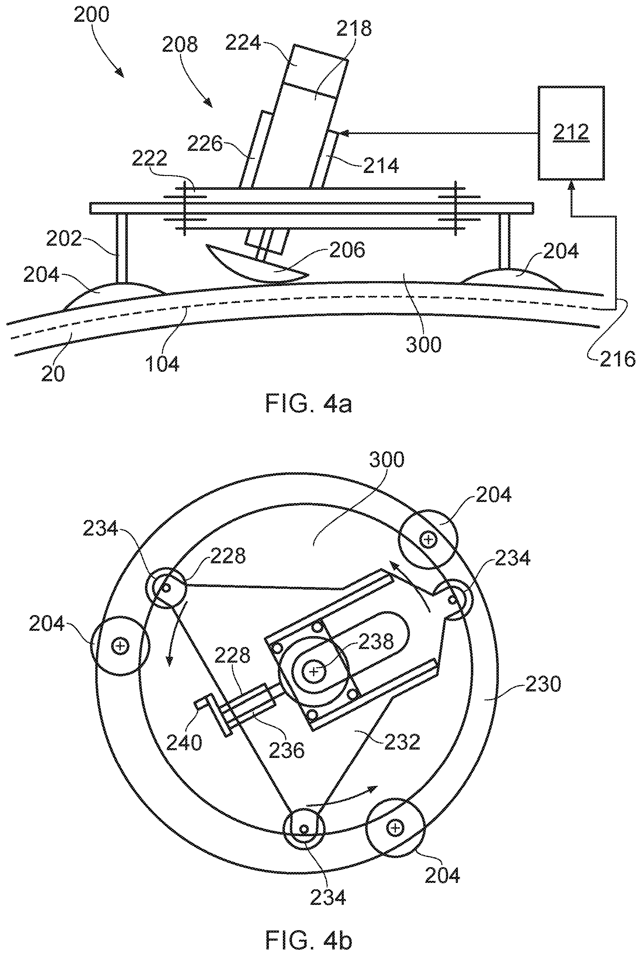

Figure 3a shows a plan view of a region of damage to a wind turbine blade 20. While the region of damage D is shown in Figure 4a, the region of damage D may not necessarily be visible from the surface 101 of the blade and may be a defect within the electrically conductive part 104.

In Figure 3b, a portion of the outer surface layer 102 has been removed to form a void 102A in the outer surface 101, meaning that a portion 104A of the electrically conductive part 104 is exposed and in particular the region of damage D is exposed. The void 102A is larger than the damage D. The removal of the portion of the outer surface layer 102 is by machining using an automated machining tool which will be described in detail below.

The exposed foil portion 104A may be cleaned after removal of the surface layer 102 to create the void 102A. The foil may be cleaned with alcohol and/or may be vacuumed to remove dust and/or debris.

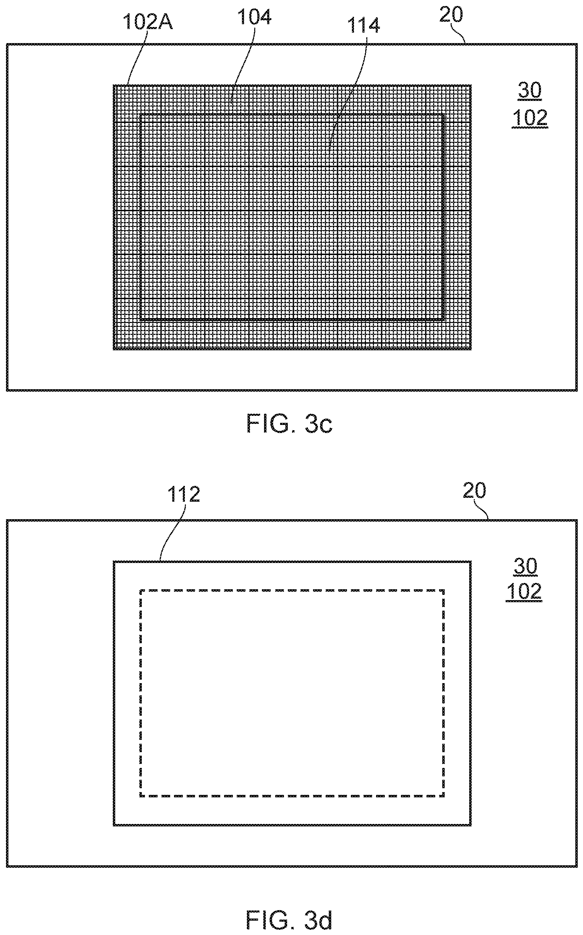

Once the exposed foil portion 104A has been prepared, a second metallic part 114, which may be a further foil part, is introduced and overlaps at least part of the exposed foil portion 104A surrounding the damage D. Figure 3c shows the second metallic part 114 arranged over at least a portion of the exposed foil portion 104A. The overlap region may be 50mm wide around the entire circumference of the damage D. The second metallic part 114 may be smaller than the void 102A. The second metallic part 114 may be held in place using tape, optionally scrim tape.

Next, a further outer surface layer portion 112 may be added to the blade in order to form an aerodynamically smooth outer surface with the surrounding portion of the surface layer 102. Figure 3d shows the further outer surface layer portion 112 arranged to cover the exposed foil portion 104A and the second metallic part 114 and to fill the void 102A in the outer surface layer 102.

The process shown in Figures 3a to 3d may be performed up-tower, down-tower or in a factory setting.

The automated machining tool 200 will now be described in detail with reference to Figures 4 to 6. In the following example, the machining tool 200 is a grinding tool which has a tool head 206 in the form of an abrasive wheel 206.

The automated machining tool 200 has a mounting portion 202 for mounting the tool 200 on the outer surface 101 of the wind turbine blade 20. The mounting portion 202 may comprise suction cups 204 for attaching the tool 200 to the outer surface 101 of the wind turbine blade 20 by vacuum suction. The tool 200 is attached to the blade 20 at the location on the outer surface 101 where the repair work is to take place. The tool 200 further comprises a tool head 206 coupled to a drive system 208 for rotating the tool head 206 and for moving the tool head forwards and away from the blade 20. The tool head 206 carries abrasive media and when the tool head 206 is rotated and brought into contact with the blade 20, the tool 200 is able to perform a machining operation on the blade 20 so as to remove material from the blade.

The drive system 208 may also comprise a transverse system 222 for moving the tool head 206 in two orthogonal directions across the outer surface 101 of the wind turbine blades 20. Movement of the tool head 206 across the surface of the blade defines a tool work area 300. The tool work area 300 is bounded by the extreme positions at which the abrasive media on the tool head 206 may make contact with the outer surface 101 of the blade 20 once the tool 200 is attached to the blade surface. The drive system 208 may take a variety of forms for moving the tool head across the outer surface of the blade. For a given repair operation the automated machining tool 200 is selected to perform an automated machining operation on the surface of the blade over a machining area 302 (e.g. see figure 3b) that is inside the tool work area 300.

A control system 212 is coupled to the drive system 208 and to the tool head 206 and to the electrically conductive part 104, e.g. the metallic foil 52, of the wind turbine blade 20. The abrasive media of the tool head 206 comprises electrically conductive material 210. The control system 212 is adapted to detect electrical contact between the electrically conductive material 210 and the electrically conductive part 104 while the tool 200 is performing the machining operation on the blade 20 using the tool head 206. This detection may comprise the simple completion of an electrical circuit when the electrically conductive material 210 makes contact with the electrically conductive part 104. Any electrical contact between the electrically material and the electrically conductive part 104, e.g. metallic foil 52 or other electrically conductive part beneath the blade surface, is detected and the control system 212 is adapted to automatically control the drive system 208 to retract the tool head 206 away from the blade 20. In this way, the machining operation is paused or halted when the tool head 206 makes contact with the electrically conductive part 104 and therefore damage to the electrically conductive part 104 by the tool head 206 can be prevented.

The drive system 208 may comprise a lift system 214 for moving the tool head 206 towards and away from the blade 20. The control system 212 may control the drive system 208 to move the tool head 206 to advance the tool head 206 into the wind turbine blade 20 while performing a machining operation, i.e. when the tool head 206 is rotating and in contact with the blade 20. The control system 212 may control the lift system 214 to advance the tool head 206 into the blade 20 by either a predetermined distance or until electrical contact between the electrically conductive material 210 and the electrically conductive part 104 is detected.

If electrical contact between the electrically conductive material 210 and the electrically conductive part 52 of the wind turbine blade is detected then the control system 212 may automatically control the lift system 214 of the drive system 208 to retract the tool head 206 away from the wind turbine blade immediately. In this way the tool 200 may be used to machine down through the non-electrically conductive materials of the surface layer 102 to the electrically conductive part, but not machine into the electrically conductive part as the tool 200 is retracted as soon as the tool touches the electrically conductive part. The machining operation and the automatic retraction of the tool head 206 may be caried out fully automatically so that the machining operation can be performed without an operator interacting with the tool 200 after the machining operation has started.

The control system 212 may include a programmable logic controller configured to retract the tool head 206 away from the electrically conductive part as soon as electrical contact is made between the electrically conductive material 210 and the electrically conductive part 52.

The electrically conductive material 210 may comprise boron doped diamond, or tungsten carbide and may be in the form of an abrasive media, for example. An electrical cable 216 may be coupled between the electrically conductive part of the wind turbine blade and the control system 212 to enable an electrical signal in the electrical cable 216 to be detected when contact is made between the electrically conductive material 210 and the electrically conductive part. For example, the control system 212 may be adapted to detect when electrical contact between the electrically conductive material 210 and the electrically conductive part of the wind turbine blade is made by monitoring a current in the electrical cable 216.

The transverse system 222 of the drive system 208 may take a variety of forms for moving the tool head 206 across the outer surface 101 of the wind turbine blade 20. For example, the drive system may comprise two orthogonal linear drive systems. The linear drive systems may be operated independently so as to provide a generally rectangular tool work area 300 within the tool 200. Alternatively, the drive system 208 may comprise a rotary drive for moving the tool head 206 about a centre of the tool, and a linear drive system for moving the tool head 206 radially back and forth with respect to the centre.

Where the tool head 206 comprises an abrasive wheel, the wheel may be rotated by a grinding motor unit 218 coupled to the drive system 208. The grinding motor unit 218 may be a variable speed motor to give freedom to balance the grinding operation between machine time and time spent to hand finish the work. The tool head 206 is rotated about a wheel axis 220 which may be coaxial with an output of the grinding motor unit 218. The grinding motor unit 218 may be mounted on the lift system 214 which in turn may be mounted on the transverse system 222 of the drive system 208.

The grinding motor unit 218 may comprise a first motor 224 for rotating the tool head 215; a second motor 226 may form part of the lift system 214 for retracting and advancing the tool head 216 towards and away from the blade 20; and the transverse system 222 may comprise any number of third motors 228 for moving the tool head 206 in the two orthogonal directions across the outer surface 101 of the blade 20. The various motors 224, 226, 228 may work independently of the positions or operation of the other motors. A predetermined grinding operation may be programmed for the tool 200 to control the motors 224, 226, 228 so as to complete the grinding operation by removing non-conductive material in the surface layer 102 from within a predetermined machining area 302 without grinding into the electrically conductive part.

The tool 200 may comprise an outer ring 230. The outer ring may carry a plurality of the suction cups 204 so as to form the mounting portion 202. As can be seen in figures 4a and 4b, three suction cups 204 may be provided. The suction cups 204 may be connected to a vacuum pump, which may provide a substantially constant suction force to hold the tool 200 to the outer surface 101 of the blade 20. The suction cups 204 may have angular compliance such that the suction cups 204 can seal to a curved surface, as typically the outer surface 101 of the blade 20 will be.

The tool 200 may further comprise a rotating structure 232 mounted for rotation with respect to the outer ring 230. The rotating structure 232 may comprise a plurality of guide wheels 234 to enable the rotating structure 232 to rotate inside the outer ring 230. One of the third motors 228 of the transverse system 222 may provide the motive force for rotating the rotating structure 232 with respect to the outer ring 230. The rotating structure 232 may be generally triangular, e.g. as illustrated in figure 4b. The rotating structure 232 may rotate but not translate relative to the outer ring 230.

The rotating structure 232 may support a linear rail or rails 236 to which is mounted the grinding motor unit 218 via the lift system 214. The linear rails 236 may extend generally radially from a centre 238 of the triangular rotating structure 232, which may be concentric with the centre of the outer ring 230. The linear rails 236 allow the grinding motor unit 218 to be moved radially back and forth from the centre 238 of the triangular rotating structure 232. Another third motor 228 may provide the motive force for moving the grinding motor unit 218 along the linear rails 236. A handle 240 may additionally be provided for manually positioning the grinding motor unit 218 along the linear rails 236.

Using the third motors 228, the grinding motor unit 218 and therefore the tool head 206 may be moved across the machining area 302 along a predetermined path. The path may form a spiral pattern, for example starting near the centre 238 and during angular rotations about the centre slowly moving radially outwardly from the centre. For example, the tool head 206 may be moved by the two third motors 228 starting at a radius of 25mm from the centre 238 and moving radially outwardly by e.g. 10mm per full 360° orbital rotation about the centre. In another example, the tool 200 may be programmed such that the tool head 206 performs a raster scan movement across the machining area 302.

During the machining operation the control system 212 may be configured to rotate the tool head 206 by activating the first motor 224 of the grinding motor unit 218. The control system 212 may be further configured to control the lift system 214 to activate the second motor 226 to advance the tool head 206 towards the outer surface 101 of the blade 20. The control system 212 may control the third motors 228 of the traverse system 222 to move the tool head 206 along the desired machining path and also controlling the lift system 214 to advance the tool head 206 further as the non-conductive material is removed from the blade 20 until the tool head 206 first touches the electrically conductive part.

As the control system 212 senses contact between the electrically conductive material 210 of the tool head 206 and the electrically conductive part, the tool head 206 is retracted a predetermined height away from the electrically conductive part, e.g. a distance of 1mm. The control system may be further adapted to automatically control the lift system 214 to advance the tool head 206 into a second area of the surface layer 102 of the wind turbine blade neighbouring a first area of the surface layer of the wind turbine blade following an instance of retracting the tool head 206 away from the first area of the wind turbine blade, due to detecting electrical contact between the electrically conductive material 210 and the electrically conductive part in the first area. The machining operation then may continue along the machining path until a fresh contact between the electrically conductive material 210 and the electrically conductive part is made. The tool 200 may repeat this mode of motion throughout the time that the tool 200 is following the machining path.

The geometry of the outer surface 101 of the blade does not need to be programmed into the tool 200 and so the programming of the programmable logic controller of the control system 212 may be straight forward without need for complex programmes and sensors. The only sensing may be the detection of electrical contact between the electrically conductive material and the electrically conductive part, and an end stop sensor for the second motor 226 for the radial movement of the grinding motor unit 218 along the liner rails 236. This radial end stop may determine the end of the grinding programme and therefore termination of the grinding operation.

The control system 212 may be adapted to terminate movement of the tool head 206 once one or more conditions have been satisfied. The conditions may include 1) a predetermined time has elapsed, 2) tool head 206 has been advanced into the wind turbine blade 20 a predetermined distance since the start of the machining operation, or 3) a predetermined number of detections of electrical contact between the electrically conductive material 210 and the electrically conductive part has occurred.

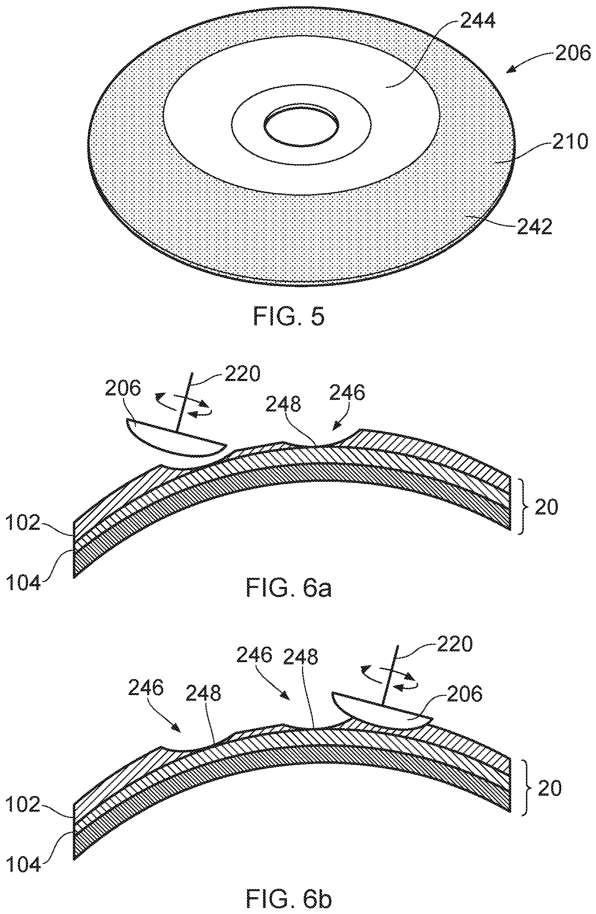

The abrasive wheel 206 may have a doubly curved surface having the electrically conductive material 210 attached thereto. The doubly curved surface 242 may be a part spherical surface. The surface 242 may be rotationally symmetric about the wheel axis of rotation 212 and have a spherical centre along the axis of rotation. The abrasive wheel 206 may have a recessed or concave central portion 244 without abrasive media. Figure 5 illustrates an exemplary abrasive wheel 206. The abrasive wheel 206 may have a diameter between approximately 50mm and 100mm.

The tool head axis of rotation 220 may be inclined with respect to the normal to the outer surface 101 of the wind turbine blade 20 in use. Figure 4a shows an exemplary tool 200 in which the entire grinding motor unit 218 is tilted with respect to the transverse system 220 such that the tool head 206 is rotatable about an axis inclined with respect to the normal to the outer surface of the wind turbine blade. This inclined wheel axis 220 in combination with the part spherical surface 242 of the tool head 206 helps the tool 200 to make shallow surface contact in both radial and tangential directions. Contact between the tool head 206 and the surface of the wind turbine blade 20 may be at a distance spaced from the wheel axis of rotation 220 as a result of the part spherical surface 242 of the tool head 206 and the angular inclination of the wheel axis 220.

The contact area of the abrasive wheel 206 having the doubly curved surface 242, which both in radial and tangential directions describes a curved contact with the blade 20, means that the ground surface on the blade will comprise a plurality of shallow depressions due to the retraction of the tool head 206 as each successive electrical contact between the electrically conductive material 210 and the electrically conductive part of the wind turbine blade 20 is detected. Each depression will have a small spot where the electrically conductive part is exposed. Since the control system 212 may be configured to advance the tool head 206 into a second area of the wind turbine blade neighbouring a first area of the wind turbine blade following an instance of retracting the tool head away from a first area, the short distance between adjacent depressions 246 can be expected in both radial and tangential directions along the machining path. The control system 212 may be adapted to advance the tool head into the second area a distance of approximately 10mm away from the first area following an instance of retracting the tool head 206. Figures 6a and 6b illustrates schematically the depressions 246 and the spots of exposed electrically conductive material 248.

The non-electrically conductive material left covering the electrically conductive part in the machining area 302 between the exposed spots 248 will be relatively thin and may need to be removed manually by hand sanding after the automated machining tool 200 has been removed from the surface of the blade 20. If the radial and tangential steps between each contact with the electrically conductive part are reduced, the remaining material between the exposed spots 248 will also be reduced, but the time to perform the machining operation to completion would increase. The converse would also be true.

The control system 212 may further comprise a security system such that the machining operation cannot machine too deep into the blade. For example, a pre-set machining depth or a predetermined machining time for the tool may be set in case no contact with the electrically conductive part is sensed by the tool 200. The automated machining tool 200 preferably is not used for machining in areas of the wind turbine blade which have no electrically conductive part beneath the surface but if this occurs accidently, or if the machining area extends beyond an area having an electrically conductive part beneath the surface, then the security system will limit the machining to the predetermined machining depth or the predetermined machining operation time.

The tool 200 may be battery powered and cordless. This may facilitate easy operation whether used up-tower, down-tower or in a factory setting. In particular, a battery operated hand held version of the tool 200 would facilitate easy operations when used for up-tower operations when an operator is working from a basket or repelling.

The tool 200 may comprise a dust extraction system. The dust extraction system may include a cover for encapsulating the tool work area 300 and an aspirator for collecting the machining dust. A skirt may be provided between the surface of the blade 20 and the outer periphery of the tool 200, e.g. the outer ring 230, and air flow through a filter may be used to contain and extract the generated machining dust.

While the above disclosure is provided within the context of a metallic foil of a lightning protection system, it may be applied to machining up to other electrically conductive parts beneath non-conductive material of a wind turbine blade, such as bolts or metallic bushings.

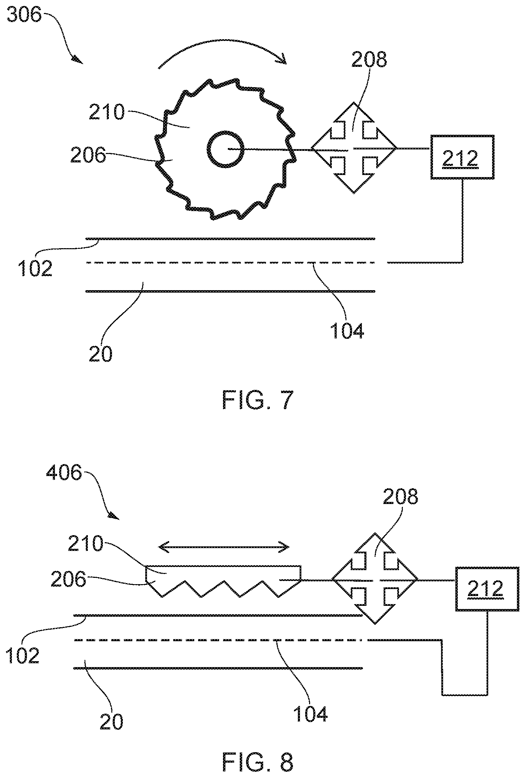

While the above disclosure centres on a grinding tool as an example of a machining tool, it will be apparent that other machining tools for removing material from a surface 102 of a wind turbine blade 20 are envisaged. For example, the machining tool may be a cutting, routing, planing or other machining tool for removing material from a surface of a wind turbine blade. The tool head 206 for removing the material, and which comprises the electrically conductive material 210, may be arranged to reciprocate and/or rotate. For example, the grinding tool described above may have a grinding wheel driven to oscillate about its axis of rotation. The machining tool may be a cutting tool having the tool head 206 arranged as a toothed saw 306, 406 comprising the electrically conductive material 210, e.g. as shown in Figures 7 and 8. The toothed saw may be arranged as a rotating saw wheel 306, or as an oscillating linear saw 406. The machining tool may be a routing tool having the tool head arranged as a rotating blade comprising the electrically conductive material. The machining tool may be a planing tool having the tool head arranged as a rotating cutter block with at least one cutting blade comprising the electrically conductive material. In each of these further examples, the drive system 208 for moving the tool head towards and away from the wind turbine blade, and the control system 212 for detecting electrical contact between the electrically conductive material 210 and the electrically conductive part 104 and automatically control the drive system 208 to retract the tool head away from the wind turbine blade, may be substantially as described above.

Although the invention has been described above with reference to one or more preferred embodiments, it will be appreciated that various changes or modifications may be made without departing from the scope of the invention as defined in the appended claims.

## Claims

1. An automated machining tool (200) for removing material from a surface of a wind turbine blade (20), comprising:
a mounting portion (202) for mounting the tool on an outer surface (101) of a wind turbine blade (20) having an electrically conductive part (104) beneath non-conductive material near the outer surface;
the automated machining tool (200) being **characterised by**:
a tool head (206) for removing the material, which comprises an electrically conductive material (210);
a drive system (208) for rotating and/or reciprocating the tool head (206) for performing a machining operation on the wind turbine blade (20) and for moving the tool head towards and away from the wind turbine blade; and
a control system (212) coupled to the drive system (208) and to the tool head (206) and adapted to be coupled to the electrically conductive part (104) of the wind turbine blade (20),
wherein the control system (212) is adapted to:
detect electrical contact between the electrically conductive material (210) and the electrically conductive part (104) while the machining tool is performing a machining operation on the wind turbine blade (20) using the tool head (206), and
automatically control the drive system (208) to retract the tool head (206) away from the wind turbine blade (20) when electrical contact between the electrically conductive material (210) and the electrically conductive part (104) of the wind turbine blade is detected.

2. The tool according to claim 1, wherein the control system (212) is further adapted to automatically control the drive system (208) to move the tool head (206) to advance the tool head into the wind turbine blade (20) while performing a machining operation.

3. The tool according to claim 2, wherein the control system (212) is further adapted to automatically control the drive system (208) to advance the tool head (206) into the wind turbine blade (20) by either a predetermined distance or until electrical contact between the electrically conductive material (210) and the electrically conductive part (104) is detected.

4. The tool according to any preceding claim, wherein the control system (212) is further adapted to automatically control the drive system (208) to retract the tool head (206) away from the wind turbine blade (20) immediately upon electrical contact between the electrically conductive material (210) and the electrically conductive part (104) of the wind turbine blade being detected.

5. The tool according to any preceding claim, wherein the control system (212) is further adapted to automatically control the drive system (208) to advance the tool head (206) into a second area of the wind turbine blade (20) neighbouring a first area of the wind turbine blade following an instance of retracting the tool head away from a first area of the wind turbine blade due to detecting electrical contact between the electrically conductive material (210) and the electrically conductive part (104) of the wind turbine blade in the first area.

6. The tool according to any preceding claim, wherein the control system (212) is further adapted to terminate rotating and/or reciprocating of the tool head (206) once one or more conditions having been satisfied, the conditions including i) a predetermined time has elapsed, ii) the tool head has been advanced into the wind turbine blade (20) a predetermined distance, or iii) a predetermined number of detections of electrical contact between the electrically conductive material (210) and the electrically conductive part (104) has occurred.

7. The tool according to any preceding claim, wherein the tool head (206) comprises an abrasive wheel (206) and the electrically conductive material (210) comprises electrically conductive abrasive media.

8. The tool according to claim 7, wherein the abrasive wheel (206) is rotatable about an axis inclined with respect to the normal to the outer surface (101) of the wind turbine blade (20) in use.

9. The tool according to claim 7 or claim 8, wherein the abrasive wheel (206) has a doubly curved surface (242) having the electrically conductive abrasive material attached thereto, preferably wherein the doubly curved surface is a part-spherical surface, further preferably wherein the abrasive wheel has a recessed or concave central portion without electrically conductive abrasive material.

10. The tool according to any preceding claim, wherein the drive system (208) is further configured for moving the tool head (206) in two orthogonal directions across the outer surface (101) of the wind turbine blade (20) in use.

11. The tool according to any preceding claim, wherein the drive system (208) is configured for moving the tool head (206) in a spiral, circular, linear or raster motion across a machining area of the wind turbine blade (20).

12. The tool according to any preceding claim, further comprising an electrical cable (216) for coupling between the electrically conductive part (104) of the wind turbine blade (20) and the control system (212), and preferably wherein the control system is adapted to detect when electrical contact is made between the electrically conductive material (210) and the electrically conductive part of the wind turbine blade by monitoring a current in the electrical cable.

13. The tool according to any preceding claim, wherein the electrically conductive material (210) comprises one or more of: boron doped diamond, or tungsten carbide.

14. The tool according to any preceding claim, wherein the mounting portion (202) comprises suction cups (204) for attaching the tool to the outer surface (101) of the wind turbine blade (20) by vacuum suction.

15. A machining system comprising a wind turbine blade (20) having an outer surface (101) and an electrically conductive part (104) beneath non-conductive material; and the tool (200) according to any preceding claim for attachment to the outer surface of the wind turbine blade and for performing a machining operation on the wind turbine blade.

16. A method of performing a machining operation on a wind turbine blade (20), comprising:
providing a wind turbine blade (20) having an outer surface (101) and an electrically conductive part (104) beneath non-conductive material near the outer surface; the method being **characterised by** the following steps:
mounting an automated machining tool (200) to the outer surface (101) of the wind turbine blade (20), the automated machining tool having a tool head (206) with electrically conductive material (210);
performing a machining operation on the wind turbine blade (20) using the tool head (206); and
sensing electrical contact between the electrically conductive material (210) and the electrically conductive part (104) of the wind turbine blade;
wherein performing the machining operation on the wind turbine blade using the tool head (206) including includes automatically retracting the tool head away from the wind turbine blade when electrical contact between the electrically conductive material (210) and the electrically conductive part (104) of the wind turbine blade is sensed.

17. The method according to claim 16, further comprising one or more of:
i) automatically moving the tool head (206) to advance the tool head into the wind turbine blade (20) while performing a machining operation;
ii) automatically advancing the tool head (206) into the wind turbine blade (20) by either a predetermined distance or until electrical contact between the electrically conductive material (210) and the electrically conductive part (104) of the wind turbine blade is detected;
iii) automatically retracting the tool head (206) away from the wind turbine blade (20) immediately upon electrical contact between the electrically conductive material (210) and the electrically conductive part (104) of the wind turbine blade is detected;
iv) automatically advancing the tool head (206) into a second area of the wind turbine blade (20) neighbouring a first area of the wind turbine blade following an instance of retracting the tool head away from a first area of the wind turbine blade due to detecting electrical contact between the electrically conductive material (210) and the electrically conductive part (104) of the wind turbine blade in the first area; and
v) automatically terminating movement of the tool head (206) once one or more conditions having been satisfied.

18. The method according to claim 16 or claim 17, wherein the automated machining tool is the tool according to any of claims 1 to 14.

19. The method according to any one of claims 16 to 18, wherein machining operation is a grinding operation.

20. The machining system according to claim 15 or the method according to any of claims 16 to 19, wherein the electrically conductive part (104) is a metallic foil (52), preferably a metallic foil forming part of a lightning protection system of the wind turbine blade (20).

## Patentansprüche

1. Automatisiertes Bearbeitungswerkzeug (200) zum Entfernen von Material von einer Oberfläche eines Windkraftanlagenblatts (20), umfassend:
einen Montageabschnitt (202) zum Montieren des Werkzeugs an einer Außenoberfläche (101) eines Windkraftanlagenblatts (20), das einen elektrisch leitfähigen Teil (104) unterhalb eines nicht leitfähigen Materials in der Nähe der Außenoberfläche aufweist;
das automatisierte Bearbeitungswerkzeug (200), das **gekennzeichnet ist durch**:
einen Werkzeugkopf (206) zum Entfernen des Materials, der ein elektrisch leitfähiges Material (210) umfasst;
ein Antriebssystem (208) zum Rotieren und/oder Hin- und Herbewegen des Werkzeugkopfs (206) zum Durchführen eines Bearbeitungsvorgangs an dem Windkraftanlagenblatt (20) und zum Bewegen des Werkzeugkopfs zum Windkraftanlagenblatt hin und von diesem weg; und
ein Steuersystem (212), das mit dem Antriebssystem (208) und dem Werkzeugkopf (206) gekoppelt ist und so angepasst ist, dass es an den elektrisch leitfähigen Teil (104) des Windkraftanlagenblatts (20) gekoppelt werden kann,
wobei das Steuersystem (212) angepasst ist zum:
Erkennen von elektrischem Kontakt zwischen dem elektrisch leitfähigen Material (210) und dem elektrisch leitfähigen Teil (104), während das Bearbeitungswerkzeug unter Verwendung des Werkzeugkopfs (206) einen Bearbeitungsvorgang am Windkraftanlagenblatt (20) durchführt, und
automatischen Steuern des Antriebssystems (208), um der Werkzeugkopf (206) vom Windkraftanlagenblatt (20) weg zurückzuziehen, wenn elektrischer Kontakt zwischen dem elektrisch leitfähigen Material (210) und dem elektrisch leitfähigen Teil (104) des Windkraftanlagenblatts erkannt ist.

2. Werkzeug nach Anspruch 1, wobei das Steuersystem (212) weiter so angepasst ist, dass es das Antriebssystem (208) automatisch steuert, um den Werkzeugkopf (206) so zu bewegen, dass es den Werkzeugkopf während Durchführens eines Bearbeitungsvorgangs in das Windkraftanlagenblatt (20) vorschiebt.

3. Werkzeug nach Anspruch 2, wobei das Steuersystem (212) weiter so angepasst ist, dass es das Antriebssystem (208) automatisch steuert, um den Werkzeugkopf (206) in das Windkraftanlagenblatt (20) entweder um einen vorbestimmten Abstand oder bis elektrischen Kontakt zwischen dem elektrisch leitfähigen Material (210) und dem elektrisch leitfähigen Teil (104) erkannt ist vorzuschieben.

4. Werkzeug nach einem vorstehenden Anspruch, wobei das Steuersystem (212) weiter so angepasst ist, dass es das Antriebssystem (208) automatisch steuert, um den Werkzeugkopf (206) vom Windkraftanlagenblatt (20) zurückzuziehen, sobald elektrischer Kontakt zwischen dem elektrisch leitfähigen Material (210) und dem elektrisch leitfähigen Teil (104) des Windkraftanlagenblatts erkannt ist.

5. Werkzeug nach einem vorstehenden Anspruch, wobei das Steuersystem (212) weiter so angepasst ist, dass es das Antriebssystem (208) automatisch steuert, um den Werkzeugkopf (206) in einen zweiten Bereich des Windkraftanlagenblatts (20), der an einen ersten Bereich des Windkraftanlagenblatts angrenzt, nach einer Instanz von Zurückziehen des Werkzeugkopfs aus einem ersten Bereich des Windkraftanlagenblatts aufgrund von Erkennen von elektrischem Kontakt zwischen dem elektrisch leitfähigen Material (210) und dem elektrisch leitfähigen Teil (104) des Windkraftanlagenblatts im ersten Bereich vorzuschieben.

6. Werkzeug nach einem vorstehenden Anspruch, wobei das Steuersystem (212) weiter so angepasst ist, dass es Rotation und/oder Hin- und Herbewegung des Werkzeugkopfs (206) beendet, sobald eine oder mehrere Bedingungen erfüllt sind, wobei die Bedingungen einschließen, dass i) eine vorbestimmte Zeit verstrichen ist, ii) der Werkzeugkopf um einen vorbestimmten Abstand in das Windkraftanlagenblatt (20) vorgeschoben wurde oder iii) eine vorbestimmte Anzahl von Erkennungen von elektrischem Kontakt zwischen dem elektrisch leitfähigen Material (210) und dem elektrisch leitfähigen Teil (104) eingetreten ist.

7. Werkzeug nach einem vorstehenden Anspruch, wobei der Werkzeugkopf (206) eine Schleifscheibe (206) umfasst und das elektrisch leitfähige Material (210) ein elektrisch leitfähiges Schleifmittel umfasst.

8. Werkzeug nach Anspruch 7, wobei die Schleifscheibe (206) in Betrieb um eine Achse rotierbar ist, die in Bezug auf die Normale zur Außenoberfläche (101) des Windkraftanlagenblatts (20) geneigt ist.

9. Werkzeug nach Anspruch 7 oder Anspruch 8, wobei die Schleifscheibe (206) eine doppelt gekrümmte Oberfläche (242) aufweist, die daran befestigt das elektrisch leitfähige Schleifmaterial aufweist, vorzugsweise wobei die doppelt gekrümmte Oberfläche eine teilkugelförmige Oberfläche ist, weiter vorzugsweise wobei die Schleifscheibe einen vertieften oder konkaven Mittelabschnitt ohne elektrisch leitfähiges Schleifmaterial aufweist.

10. Werkzeug nach einem vorstehenden Anspruch, wobei das Antriebssystem (208) weiter so konfiguriert ist, dass es in Betrieb den Werkzeugkopf (206) in zwei orthogonalen Richtungen über die Außenoberfläche (101) des Windkraftanlagenblatts (20) bewegt.

11. Werkzeug nach einem vorstehenden Anspruch, wobei das Antriebssystem (208) so konfiguriert ist, dass es den Werkzeugkopf (206) in einer spiralförmigen, kreisförmigen, linearen oder rasterförmigen Bewegung über einen Bearbeitungsbereich des Windkraftanlagenblatts (20) bewegt.

12. Werkzeug nach einem vorstehenden Anspruch, weiter umfassend ein elektrisches Kabel (216) zum Koppeln zwischen dem elektrisch leitfähigen Teil (104) des Windkraftanlagenblatts (20) und dem Steuersystem (212), und vorzugsweise wobei das Steuersystem so angepasst ist, dass es durch Überwachen eines Stroms im elektrischen Kabel erkennt, wenn elektrischer Kontakt zwischen dem elektrisch leitfähigen Material (210) und dem elektrisch leitfähigen Teil des Windkraftanlagenblatts hergestellt ist.

13. Werkzeug nach einem vorstehenden Anspruch, wobei das elektrisch leitfähige Material (210) eines oder mehrere umfasst von: bor-dotiertem Diamanten oder Wolframcarbid.

14. Werkzeug nach einem vorstehenden Anspruch, wobei der Montageabschnitt (202) Saugnäpfe (204) zum Befestigen des Werkzeugs an der Außenoberfläche (101) des Windkraftanlagenblatts (20) durch Vakuumansaugung umfasst.

15. Bearbeitungssystem, umfassend ein Windkraftanlagenblatt (20), das eine Außenoberfläche (101) und einen elektrisch leitfähigen Teil (104) unterhalb von nicht leitfähigem Material aufweist; und das Werkzeug (200) nach einem vorstehenden Anspruch zum Befestigen an der Außenoberfläche des Windkraftanlagenblatts und zum Durchführen eines Bearbeitungsvorgangs an dem Windkraftanlagenblatt.

16. Verfahren zum Durchführen eines Bearbeitungsvorgangs an einem Windkraftanlagenblatt (20), umfassend:
Bereitstellen eines Windkraftanlagenblatts (20), das eine Außenoberfläche (101) und einen elektrisch leitfähigen Teil (104) unterhalb eines nicht leitfähigen Materials in der Nähe der Außenoberfläche aufweist;
wobei das Verfahren durch die folgenden Schritte gekennzeichnet ist:
Montieren eines automatisierten Bearbeitungswerkzeugs (200) an der Außenoberfläche (101) des Windkraftanlagenblatts (20), wobei das automatisierte Bearbeitungswerkzeug einen Werkzeugkopf (206) mit elektrisch leitfähigem Material (210) aufweist;
Durchführen eines Bearbeitungsvorgangs an dem Windkraftanlagenblatt (20) unter Verwendung des Werkzeugkopfs (206); und
Erfassen von elektrischem Kontakt zwischen dem elektrisch leitfähigen Material (210) und dem elektrisch leitfähigen Teil (104) des Windkraftanlagenblatts;
wobei Durchführen des Bearbeitungsvorgangs am Windkraftanlagenblatt unter Verwendung des Werkzeugkopfs (206) automatisches Zurückziehen des Werkzeugkopfs vom Windkraftanlagenblatt einschließt, wenn elektrischer Kontakt zwischen dem elektrisch leitfähigen Material (210) und dem elektrisch leitfähigen Teil (104) des Windkraftanlagenblatts erfasst wird.

17. Verfahren nach Anspruch 16, weiter umfassend eines oder mehrere von:
i) automatischem Bewegen des Werkzeugkopfs (206) zum Vorschieben des Werkzeugkopfs in das Windkraftanlagenblatt (20) während Durchführens eines Bearbeitungsvorgangs;
ii) automatischem Vorschub des Werkzeugkopfs (206) in das Windkraftanlagenblatt (20) entweder um einen vorbestimmten Abstand oder bis elektrischen Kontakt zwischen dem elektrisch leitfähigen Material (210) und dem elektrisch leitfähigen Teil (104) des Windkraftanlagenblatts erkannt wird;
iii) automatischem Zurückziehen des Werkzeugkopfs (206) vom Windkraftanlagenblatt (20) weg unmittelbar nachdem elektrischer Kontakt zwischen dem elektrisch leitfähigen Material (210) und dem elektrisch leitfähigen Teil (104) des Windkraftanlagenblatts erkannt wurde;
iv) automatischem Vorschieben des Werkzeugkopfs (206) in einen zweiten Bereich des Windkraftanlagenblatts (20), der an einen ersten Bereich des Windkraftanlagenblatts angrenzt, nach einer Instanz von Zurückziehen des Werkzeugkopfs aus einem ersten Bereich des Windkraftanlagenblatts aufgrund von Erkennen von elektrischem Kontakt zwischen dem elektrisch leitfähigen Material (210) und dem elektrisch leitfähigen Teil (104) des Windkraftanlagenblatts im ersten Bereich; und
v) automatischem Beenden von Bewegung des Werkzeugkopfs (206), wenn eine oder mehrere Bedingungen erfüllt sind.

18. Verfahren nach Anspruch 16 oder Anpruch 17, wobei es sich bei dem automatisierten Bearbeitungswerkzeug um ein Werkzeug nach einem der Ansprüche 1 bis 14 handelt.

19. Verfahren nach einem der Ansprüche 16 bis 18, wobei es sich bei dem Bearbeitungsvorgang um einen Schleifvorgang handelt.

20. Bearbeitungssystem nach Anspruch 15 oder das Verfahren nach einem der Ansprüche 16 bis 19, wobei es sich bei dem elektrisch leitfähigen Teil (104) um eine Metallfolie (52) handelt, vorzugsweise um eine Metallfolie, die Teil einer Blitzschutzeinrichtung des Windkraftanlagenblatts (20) ist.

## Revendications

1. Outil d'usinage automatisé (200) pour éliminer un matériau d'une surface d'une pale d'éolienne (20), comprenant :
une partie de montage (202) pour monter l'outil sur une surface extérieure (101) d'une pale d'éolienne (20) présentant une partie électroconductrice (104) sous un matériau non conducteur près de la surface extérieure ;
l'outil d'usinage automatisé (200) étant **caractérisé par** :
une tête d'outil (206) pour éliminer le matériau, qui comprend un matériau électroconducteur (210) ;
un système d'entraînement (208) pour la rotation et/ou le mouvement alternatif de la tête d'outil (206) pour effectuer une opération d'usinage sur la pale d'éolienne (20) et pour déplacer la tête d'outil vers et loin de la pale d'éolienne ; et
un système de commande (212) couplé au système d'entraînement (208) et à la tête d'outil (206) et adapté pour être couplé à la partie électroconductrice (104) de la pale d'éolienne (20),
dans lequel le système de commande (212) est adapté pour :
détecter le contact électrique entre le matériau électroconducteur (210) et la pièce électroconductrice (104) pendant que l'outil d'usinage effectue une opération d'usinage sur la pale d'éolienne (20) à l'aide de la tête d'outil (206), et
commander automatiquement le système d'entraînement (208) pour rétracter la tête d'outil (206) loin de la pale d'éolienne (20) lorsqu'un contact électrique entre le matériau électroconducteur (210) et la partie électroconductrice (104) de la pale d'éolienne est détecté.

2. Outil selon la revendication 1, dans lequel le système de commande (212) est en outre adapté pour commander automatiquement le système d'entraînement (208) afin de déplacer la tête d'outil (206) pour la faire avancer dans la pale d'éolienne (20) tout en effectuant une opération d'usinage.

3. Outil selon la revendication 2, dans lequel le système de commande (212) est en outre adapté pour commander automatiquement le système d'entraînement (208) afin de faire avancer la tête d'outil (206) dans la pale d'éolienne (20) soit d'une distance prédéterminée, soit jusqu'à ce qu'un contact électrique entre le matériau électroconducteur (210) et la partie électroconductrice (104) soit détecté.

4. Outil selon une quelconque revendication précédente, dans lequel le système de commande (212) est en outre adapté pour commander automatiquement le système d'entraînement (208) afin de rétracter la tête d'outil (206) loin de la pale d'éolienne (20) immédiatement après la détection d'un contact électrique entre le matériau électroconducteur (210) et la partie électroconductrice (104) de la pale d'éolienne.

5. Outil selon une quelconque revendication précédente, dans lequel le système de commande (212) est en outre adapté pour commander automatiquement le système d'entraînement (208) afin de faire avancer la tête d'outil (206) dans une seconde zone de la pale d'éolienne (20) voisine d'une première zone de la pale d'éolienne après un retrait de la tête d'outil d'une première zone de la pale d'éolienne dû à la détection d'un contact électrique entre le matériau électroconducteur (210) et la partie électroconductrice (104) de la pale d'éolienne dans la première zone.

6. Outil selon une quelconque revendication précédente, dans lequel le système de commande (212) est en outre adapté pour arrêter la rotation et/ou le mouvement alternatif de la tête d'outil (206) une fois qu'une ou plusieurs conditions ont été satisfaites, les conditions incluant i) un temps prédéterminé s'est écoulé, ii) la tête d'outil a été avancée dans la pale d'éolienne (20) d'une distance prédéterminée, ou iii) un nombre prédéterminé de détections de contact électrique entre le matériau électroconducteur (210) et la partie électroconductrice (104) s'est produit.

7. Outil selon une quelconque revendication précédente, dans lequel la tête d'outil (206) comprend une meule abrasive (206) et le matériau électroconducteur (210) comprend un milieu abrasif électroconducteur.

8. Outil selon la revendication 7, dans lequel la meule abrasive (206) est rotative autour d'un axe incliné par rapport à la normale à la surface extérieure (101) de la pale d'éolienne (20) en cours d'utilisation.

9. Outil selon la revendication 7 ou la revendication 8, dans lequel la meule abrasive (206) présente une surface doublement incurvée (242), à laquelle est fixé le matériau abrasif électroconducteur, de préférence dans lequel la surface doublement incurvée est une surface partiellement sphérique, de préférence en outre dans lequel la meule abrasive présente une partie centrale en retrait ou concave sans matériau abrasif électroconducteur.

10. Outil selon une quelconque revendication précédente, dans lequel le système d'entraînement (208) est en outre configuré pour déplacer la tête d'outil (206) dans deux directions orthogonales sur la surface extérieure (101) de la pale d'éolienne (20) en cours d'utilisation.

11. Outil selon une quelconque revendication précédente, dans lequel le système d'entraînement (208) est configuré pour déplacer la tête d'outil (206) dans un mouvement en spirale, circulaire, linéaire ou en trame sur une zone d'usinage de la pale d'éolienne (20).

12. Outil selon une quelconque revendication précédente, comprenant en outre un câble électrique (216) pour le couplage entre la partie électroconductrice (104) de la pale d'éolienne (20) et le système de commande (212), et de préférence dans lequel le système de commande est adapté pour détecter le moment où un contact électrique est établi entre le matériau électroconducteur (210) et la partie électroconductrice de la pale d'éolienne en surveillant un courant dans le câble électrique.

13. Outil selon une quelconque revendication précédente, dans lequel le matériau électroconducteur (210) comprend un ou plusieurs des éléments suivants : diamant dopé au bore ou carbure de tungstène.

14. Outil selon une quelconque revendication précédente, dans lequel la partie de montage (202) comprend des ventouses (204) pour fixer l'outil à la surface extérieure (101) de la pale d'éolienne (20) par aspiration sous vide.

15. Système d'usinage comprenant une pale d'éolienne (20) présentant une surface extérieure (101) et une partie électroconductrice (104) sous un matériau non conducteur ; et l'outil (200) selon une quelconque revendication précédente pour la fixation à la surface extérieure de la pale d'éolienne et pour effectuer une opération d'usinage sur la pale d'éolienne.

16. Procédé de réalisation d'une opération d'usinage sur une pale d'éolienne (20), comprenant :
fourniture d'une pale d'éolienne (20) présentant une surface extérieure (101) et une partie électroconductrice (104) sous un matériau non conducteur près de la surface extérieure ;
le procédé étant **caractérisé par** les étapes suivantes :
montage d'un outil d'usinage automatisé (200) sur la surface extérieure (101) de la pale d'éolienne (20), l'outil d'usinage automatisé présentant une tête d'outil (206) avec un matériau électroconducteur (210) ;
réalisation d'une opération d'usinage sur la pale d'éolienne (20) à l'aide de la tête d'outil (206) ; et
détection d'un contact électrique entre le matériau électroconducteur (210) et la partie électroconductrice (104) de la pale d'éolienne ;
dans lequel la réalisation de l'opération d'usinage sur la pale d'éolienne à l'aide de la tête d'outil (206) comprend le retrait automatique de la tête d'outil de la pale d'éolienne lorsque le contact électrique entre le matériau électroconducteur (210) et la partie électroconductrice (104) de la pale d'éolienne est détecté.

17. Procédé selon la revendication 16, comprenant en outre une ou plusieurs parmi :
i) le déplacement automatiqueme de la tête d'outil (206) pour la faire avancer dans la pale d'éolienne (20) tout en effectuant une opération d'usinage ;
ii) le fait d'avancer automatiquement la tête d'outil (206) dans la pale d'éolienne (20) soit d'une distance prédéterminée, soit jusqu'à ce qu'un contact électrique entre le matériau électroconducteur (210) et la partie électroconductrice (104) de la pale d'éolienne soit détecté ;
iii) la rétractation automatique de la tête d'outil (206) loin de la pale d'éolienne (20) dès qu'un contact électrique entre le matériau électroconducteur (210) et la partie électroconductrice (104) de la pale d'éolienne est détecté ;
iv) le fait d'avancer automatiquement la tête d'outil (206) dans une seconde zone de la pale d'éolienne (20) voisine d'une première zone de la pale d'éolienne après un retrait de la tête d'outil d'une première zone de la pale d'éolienne dû à la détection d'un contact électrique entre le matériau électroconducteur (210) et la partie électroconductrice (104) de la pale d'éolienne dans la première zone ; et
v) l'arrêt automatique du mouvement de la tête d'outil (206) une fois qu'une ou plusieurs conditions ont été satisfaites.

18. Procédé selon la revendication 16 ou la revendication 17, dans lequel l'outil d'usinage automatisé est l'outil selon l'une quelconque des revendications 1 à 14.

19. Procédé selon l'une quelconque des revendications 16 à 18, dans lequel l'opération d'usinage est une opération de rectification.

20. Système d'usinage selon la revendication 15 ou procédé selon l'une quelconque des revendications 16 à 19, dans lequel la partie électroconductrice (104) est une feuille métallique (52), de préférence une feuille métallique faisant partie d'un système de protection contre la foudre de la pale d'éolienne (20).
